# EUROPÄISCHE PATENTSCHRIFT

(11) **EP 2 914 935 B1**
(45) Veröffentlichungstag und Bekanntmachung des Hinweises auf die Patenterteilung: **03.10.2018**
(21) Anmeldenummer: 13739353.4
(22) Anmeldetag: 26.06.2013
(51) Int. Cl.: G01D 3/036, G01F 1/22

(54) **MESSVORRICHTUNG, MESSANORDNUNG UND VERFAHREN ZUR BESTIMMUNG EINER MESSGRÖSSE**
MEASURING DEVICE, MEASURING ARRANGEMENT, AND METHOD FOR DETERMINING A MEASURED VARIABLE
DISPOSITIF DE MESURE, INSTALLATION DE MESURE ET PROCÉDÉ DE DÉTERMINATION D'UNE GRANDEUR DE MESURE

(30) Priorität: 31.10.2012 DE 102012021312
(43) Veröffentlichungstag der Anmeldung: 09.09.2015
(73) Patentinhaber: KROHNE Messtechnik GmbH, 47058 Duisburg (DE)
(72) Erfinder: DAHEIM, Michael, 47057 Duisburg (DE)
(74) Vertreter: Gesthuysen Patent- und Rechtsanwälte
(86) Internationale Anmeldenummer: PCT/EP2013/001871
(87) Internationale Veröffentlichungsnummer: WO 2014/067591

(56) Entgegenhaltungen:
- WO-A2-2004/038934
- DE-A1-102006 016 381
- DE-A1-102007 030 700

## Beschreibung

Dargestellt ist eine Messvorrichtung zur Bestimmung mindestens einer Messgröße mit mindestens einer Sensorvorrichtung, mindestens einer Auswertevorrichtung und mindestens einer Schnittstelle. Dabei erzeugt die Sensorvorrichtung mindestens eine zumindest von der Messgröße abhängige Messinformation und ermittelt die Auswertevorrichtung mindestens einen Ergebniswert für die Messgröße. Die Erfindung betrifft eine Messanordnung mit mindestens einer Messvorrichtung zur Bestimmung mindestens einer Messgröße und mit mindestens einer von der Messvorrichtung separaten Datenvorrichtung. Dabei erzeugt die Messvorrichtung ebenfalls mindestens eine zumindest von der Messgröße abhängige Messinformation und ermittelt mindestens einen Ergebniswert für die Messgröße. Weiterhin sind die Messvorrichtung und die Datenvorrichtung zumindest temporär miteinander verbunden. Zudem bezieht sich die Erfindung auf ein Verfahren zur Bestimmung mindestens einer Messgröße. Bei der Messgröße handelt es sich beispielsweise um den Durchfluss, den Füllstand, den pH-Wert oder die Temperatur eines Mediums.

In der modernen Prozessautomatisierung wird eine Vielzahl von Messgeräten zur Bestimmung oder zur Überwachung von Messgrößen eingesetzt, um Prozesse zu überwachen oder zu steuern. Bei vielen Messungen sind spezifische Informationen über das Messmedium, über den Prozess oder allgemein die Rahmenbedingungen erforderlich. Dabei muss gelegentlich auch auf sekundäre Messgrößen Rücksicht genommen werden, da die bei der Messung direkt ermittelte Größe mehrfache Abhängigkeiten von unterschiedlichen variablen Zustandsgrößen aufweist. Insofern sind ggf. größere Speichereinheiten zur Hinterlegung der Parameter bzw. Informationen erforderlich. Weiterhin können die für die möglichst genaue Messung erforderlichen Berechnungsformeln bzw. Auswertealgorithmen in der Anwendung aufwändig sein.

Wird beispielsweise der Durchfluss eines fließfähigen Mediums ermittelt, so muss je nach Messprinzip für hochgenaue Messungen auch die Viskosität des Mediums in die Betrachtung bzw. Auswertung einbezogen werden. Gleiches gilt für die Dichte des Mediums, wenn zwischen Massen- und Volumendurchflussmessungen umgerechnet werden soll.

Die Implementierung von komplexen Berechnungen oder das Ermöglichen von großen Datenspeichern erhöht die Kosten der Messvorrichtungen und kollidiert ggf. mit der Anwendung. Insbesondere Messungen in explosionsgefährdeten Bereichen machen eine Limitierung der für die Messvorrichtung zur Verfügung stehenden Energie erforderlich. Dies läuft jedoch der Tatsache zuwider, dass die Ausführung von längeren Algorithmen mit häufigem Datenzugriff auf Speichereinheiten zumeist mit einem erhöhten Energiebedarf verbunden ist.

Die Offenlegungsschrift DE 10 2006 016 381 A1 zeigt eine Messanordnung mit mindestens einem Messgerät und einer von dem Messgerät getrennt ausgestalteten und angeordneten Auswertevorrichtung. Das Messgerät generiert einen Rohwert, aus dem die Auswertevorrichtung den Messwert ermittelt. In einer Ausgestaltung hat die Auswertevorrichtung Zugriff auf ein zusätzliches Messgerät. Der ermittelte Messwert wird vom Messgerät über eine zum Messgerät gehörende Anzeigeeinheit dargestellt. Das Messgerät dient daher der Erzeugung eines Rohwertes und der Anzeige des daraus von einer separaten Vorrichtung gewonnenen Messwertes.

Ein Füllstandmessgerät, das für beliebige Anwendungen einsetzbar ist, beschreibt die Offenlegungsschrift DE 102 60 959 A1. Dabei ist in einem Speicher eine Vielzahl von Parametersätzen hinterlegt, die für die unterschiedlichen Anwendungen passend sind. Eine Auswerteeinheit greift jeweils auf den zugehörigen Parametersatz zu und berechnet aus dem eigentlichen Messsignal den Füllstand.

Aus der Druckschrift DE 10 2007 030 700 ist ein Messgerät bekannt, das über eine Schnittstelle unterschiedliche Systemparameter von einer externen Datenvorrichtung erhält.

Der Erfindung liegt daher die Aufgabe zugrunde, eine Messanordnung und auch ein Verfahren zur Bestimmung einer Messgröße anzugeben, die sich mit einem beschränkten Energie- und Speicherbedarf begnügt und die zudem eine aufwändige Auswertung zur Gewinnung des Ergebniswerts für die Messgröße erlaubt.

Eine Messvorrichtung ist zunächst und im Wesentlichen dadurch gekennzeichnet, dass die Auswertevorrichtung die Messinformation oder eine davon abhängige Information über die Schnittstelle ausgibt, dass die Auswertevorrichtung über die Schnittstelle mindestens eine in Abhängigkeit von der Messinformation oder der davon abhängigen Information erzeugte Zwischeninformation empfängt und dass die Auswertevorrichtung in Abhängigkeit von der Zwischeninformation den Ergebniswert ermittelt.

Die Messvorrichtung erzeugt eine Messinformation, die von der zu bestimmenden Messgröße abhängt und aus der sich daher auch ein Ergebniswert als Messwert für die Messgröße ermitteln lässt. Diese Ermittlung erfolgt nicht vollständig in einer Messvorrichtung und nicht vollständig in einer von der Messvorrichtung separaten Einheit, sondern die Messvorrichtung erhält ausgehend von der Messinformation von einer getrennten Vorrichtung eine Zwischeninformation, mit der die Messvorrichtung weiterrechnet bzw. den Messwert endgültig ermittelt. Ein Teil der Messwertermittlung ist dadurch gleichsam nach außen verlagert. Ein Vorteil besteht darin, dass so die Messvorrichtung relativ einfach und kompakt aufgebaut sein kann. Auch der Energiebedarf für ggf. aufwändige Berechnungen wird so aus dem Prozessbereich nach außen in einen sicheren Bereich verlagert.

Für die Datenkommunikation verfügt die Messvorrichtung über eine Schnittstelle, die in einer Ausgestaltung insbesondere auch den Anschluss an das Internet erlaubt, so dass bei dieser Ausgestaltung auch die Messvorrichtung die Daten bzw. Informationen oder Signale entsprechend verarbeiten bzw. erzeugen kann. Die Verbindung nach außen kann dabei auch ggf. nur für gewisse Zeiträume erzeugt werden.

Die zuvor hergeleitete und aufgezeigte Aufgabe ist erfindungsgemäß bei der eingangs genannten Messanordnung dadurch gelöst, dass die Auswertevorrichtung die Messinformation oder eine davon abhängige Information an die Datenvorrichtung ausgibt. Die Datenvorrichtung ermittelt eine von der Messinformation oder der davon abhängigen Information abhängige Zwischeninformation, die die Auswertevorrichtung empfängt. Schließlich ermittelt die Auswertevorrichtung in Abhängigkeit von der Zwischeninformation den Ergebniswert. Die obigen Ausführungen über die Messvorrichtung gelten entsprechend auch für die Messanordnung bzw. die Erläuterungen der Messanordnung gelten entsprechend auch für die Messvorrichtung, die insbesondere ein Teil der Messanordnung ist.

Die erfindungsgemäße Messanordnung, die die Bestimmung mindestens einer Messgröße erlaubt, setzt sich zumindest zusammen aus einer eigentlichen Messvorrichtung und einer Datenvorrichtung. Die Messvorrichtung ist für die Messung der Messgröße ausgelegt und erlaubt ausgehend von einer Messinformation als Primär- oder Rohwert die Ermittlung - insbesondere die Berechnung- des Ereigniswerts als für die Messung als Messwert auszugebender Wert. Für die Ermittlung ist die Datenvorrichtung vorgesehen, die sich beispielsweise durch einen größeren Datenspeicher oder einen überlegeneren Rechenprozessor gegenüber der Messvorrichtung auszeichnet. Alternativ ist die Datenvorrichtung für die Berechnung der Messvorrichtung dadurch überlegen, dass sich die Datenvorrichtung in einem Bereich befindet, der keiner Energiebegrenzung unterliegt. Solche Energiebegrenzungen sind beispielsweise bei der Anwendung innerhalb von explosionsgefährdeten Zonen üblich. Für die Ermittlung des Ergebniswerts wird die Messinformation von der Messvorrichtung erzeugt, an die Datenvorrichtung übertragen und dort zu einer Zwischeninformation verarbeitet. Diese Zwischeninformation wird dann wiederum von der Messvorrichtung für die Ermittlung des Ereigniswerts verwendet.

In einer Ausgestaltung der Messanordnung ist mindestens eine Sekundärsensorvorrichtung vorgesehen, die mindestens eine Sekundärmessinformation erzeugt. Durch diese zusätzliche Information kann die Messgenauigkeit bei der zu bestimmenden Messgröße erhöht werden, indem Abhängigkeiten von einer solchen Sekundärmessgröße in die Ermittlung des Ergebniswerts einbezogen werden oder indem die gleiche Messgröße zur Kontrolle oder zum Abgleich erneut und ggf. mit einem anderen Messverfahren bestimmt wird.

Die Sekundärmessinformation wird daher in einer Ausgestaltung von der Sekundärsensorvorrichtung an die Datenvorrichtung übermittelt. Anschlussproblematiken und das Abfragen wird daher auch von der Messvorrichtung auf die Datenvorrichtung und den damit einhergehenden größeren Möglichkeiten verlagert.

Die Datenvorrichtung ist dabei in einer Ausgestaltung derartig ausgestaltet, dass sie die Zwischeninformation mindestens in Abhängigkeit von der Sekundärmessinformation ermittelt. In dieser Ausgestaltung verrechnet die Datenvorrichtung gleichsam die Messinformation mit der Sekundärmessinformation, um daraus die Zwischeninformation zu generieren. Alternativ übermittelt die Datenvorrichtung die Sekundärinformation oder ggf. eine davon abhängige Information an die Messvorrichtung, so dass diese damit und mit der Zwischeninformation den Ergebniswert ermittelt.

Die zuvor hergeleitete und aufgezeigte Aufgabe ist nach einer zusätzlichen Lehre der Erfindung bei dem eingangs genannten Verfahren zur Bestimmung mindestens einer Messgröße durch ein Verfahren, das zumindest folgende Schritte umfasst, gelöst: Von einer Messvorrichtung wird mindestens eine von der Messgröße abhängige Messinformation erzeugt. Von der Messvorrichtung wird die Messinformation oder eine davon abhängige Information an eine von der Messvorrichtung separate Datenvorrichtung übermittelt. Von der separaten Datenvorrichtung wird ausgehend von der Messinformation oder der davon abhängigen Information mindestens eine Zwischeninformation ermittelt. Daran anschließend wird von der Messvorrichtung ausgehend mindestens von der mindestens einen Zwischeninformation mindestens ein Ergebniswert für die Messgröße ermittelt.

Das Verfahren zur Bestimmung einer Messgröße setzt beim Übergang von der direkt bestimmten Messinformation als dem primären Rohmesswert, in dem sich die eigentlich interessierende Messgröße wiederspiegelt, zum Ergebniswert für die bestimmte bzw. gemessene Messgröße einen Zwischenschritt ein, indem von einer Datenvorrichtung ausgehend von der Messinformation oder einer davon abhängigen Information, die beispielsweise durch eine Vorverarbeitung der Messinformation von der Messvorrichtung entsteht, eine Zwischeninformation ermittelt und der Messvorrichtung zur Verfügung gestellt wird. Diese Zwischeninformation, die beispielsweise auf aufwändigeren Algorithmen oder Berechnungen beruht oder für die Zugriff auf größere Datensätze erforderlich ist, wird dann von der Messvorrichtung zur Ermittlung des Ergebniswerts verwendet.

Die zuvor gemachten Ausführungen über die Messvorrichtung und die erfindungsgemäße Messanordnung gelten entsprechend auch hier bei dem Verfahren bzw. gelten die Erläuterungen und Ausgestaltungen des Verfahrens auch entsprechend für die Messvorrichtung und die Messanordnung.

In einer Ausgestaltung des erfindungsgemäßen Verfahrens wird von einer Sekundärsensorvorrichtung mindestens eine Sekundärmessinformation erzeugt. In dieser Ausgestaltung wird mehr Information über das zu messende Medium oder den zu messenden Prozess oder Raum usw. durch eine Sekundärsensorvorrichtung gewonnen. Dies dient beispielsweise dazu, um die Messgenauigkeit zu erhöhen oder um eine Plausibilitätsbetrachtung durchzuführen. Wird beispielsweise der Füllstand eines Mediums mittels einer Messvorrichtung, die das Radar-Prinzip anwendet, kontinuierlich gemessen, so ist beispielsweise die Sekundärsensorvorrichtung als Grenzstandschalter ausgestaltet. Alternativ dient die Sekundärsensorvorrichtung zur Erzeugung von Sekundärmessinformationen, die für Auflösung der Abhängigkeit der (primären) Messgröße von dieser Sekundärmessgröße verwendet werden. So ist beispielsweise die Temperaturabhängigkeit der (primären) Messgröße durch die Messung der Temperatur zu berücksichtigen.

Die Messung der Sekundärmessgröße findet dabei ihre Anwendung, indem in einer Ausgestaltung die Zwischeninformation ausgehend von der Sekundärmessinformation und ausgehend entweder von der Messinformation oder von der davon abhängigen Information ermittelt wird. In einer weiteren Ausgestaltung wird der Ergebniswert ausgehend von der Sekundärmessinformation und der Zwischeninformation ermittelt.

Im Einzelnen gibt es eine Vielzahl von Möglichkeiten, die Messvorrichtung, die erfindungsgemäße Messanordnung und das erfindungsgemäße Verfahren auszugestalten und weiterzubilden. Dazu wird verwiesen einerseits auf die den Patentansprüchen 1, und 4 nachgeordneten Patentansprüche, andererseits auf die folgende Beschreibung von Ausführungsbeispielen in Verbindung mit der Zeichnung. In der Zeichnung zeigen
- Fig. 1: eine schematische, im Wesentlichen die funktionalen Wirkzusammenhängen anhand eines Blockschaltbilds verdeutlichende Darstellung einer erfindungsgemäßen Messanordnung und
- Fig. 2: ein schematisches Flussdiagramm für eine exemplarische Ausgestaltung der Schritte des erfinderischen Verfahrens.

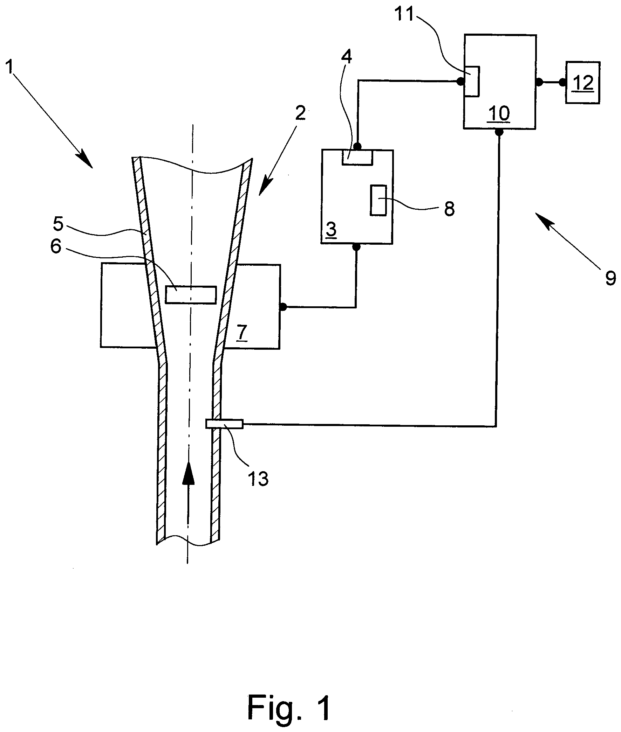

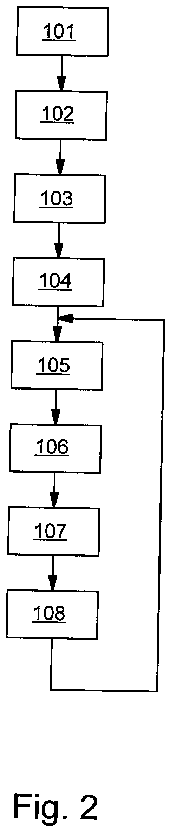

In der Fig. 1 ist ein Ausführungsbeispiel einer Messvorrichtung 1 als Teil einer Messanordnung 9 dargestellt, wobei die Figur keine Darstellung im Sinne eines korrekten elektrischen Schaltplans ist, sondern vielmehr die Wirkzusammenhänge zwischen den verschiedenen Bestandteilen der Messanordnung 1 erkennbar werden lassen soll. In der Fig. 2 ist ergänzend ein Ablauf der Schritte des Verfahrens zur Bestimmung einer Messgröße dargestellt.

Die Fig. 1 zeigt teilweise als Blockschaltbild ausgestaltet eine Messanordnung 1 mit einer Sensorvorrichtung 2, die der Messung des Durchflusses eines Mediums (angedeutet durch den Pfeil) nach dem Schwebekörper-Prinzip dient. Die Sensorvorrichtung 2 ist mit einer Auswertevorrichtung 3 verbunden, die ausgehend von einer Messinformation der Sensorvorrichtung 2 einen Ergebniswert - also insbesondere den Messwert - für die Messgröße Durchfluss ermittelt bzw. speziell berechnet. Die Messinformation ist daher ein Rohwert oder ein Primärmesswert, aus dem sich der Durchfluss ergibt.

Um vom Rohwert der Messung zum Durchfluss zu gelangen, sind weitere Daten als Information über das Messmedium und weitere Berechnungsschritte erforderlich. So fließt beispielsweise die Viskosität des Messmediums bei der Ermittlung des Durchflusses als relevante Größe ein.

Problematisch an dieser Abhängigkeit von Mediums- oder Umgebungs-/Prozessvariablen ist je nach Messprinzip bzw. der Art der Anwendung die Datenmenge oder die ggf. rechenintensiven Zusammenhänge zwischen den einzelnen Größen. Einerseits kann diesen Anforderungen durch eine entsprechende Auswahl der Komponenten begegnet werden, was jedoch ggf. kostenintensiv ist. Andererseits lässt sich entweder die Anwendung auf einzelne Medien oder Umgebungsbedingungen einschränken oder die Messgenauigkeit wird durch entsprechende Vereinfachungen bei der Auswertung herabgesetzt. Schwierigkeiten können bei den Berechnungen insbesondere dann auftreten, wenn sich das Messgerät beispielsweise in einem explosionsgefährdeten Bereich befindet, so dass eine Beschränkung der Energiezufuhr besteht. Komplexere Berechnungen können daher - bei bestehender Energiebegrenzung - zu einer deutlichen Verlängerung der Berechnungsdauer führen, was zumeist im Gegensatz dazu steht, dass ein gewisses Bedürfnis nach zeitnahen Messwerten besteht.

Die Daten über die Viskosität der unterschiedlichen Medien bzw. auch die Korrektur hinsichtlich der Temperaturabhängigkeit der Viskosität werden daher in der gezeigten Ausgestaltung nicht vollständig in der Messvorrichtung 1 selbst vorgehalten bzw. beachtet, sondern sind extern abgespeichert bzw. werden extern außerhalb der Messvorrichtung 1 berechnet. Für den Datenaustauch verfügt die Auswertevorrichtung 3 über eine Schnittstelle 4, die beispielsweise den Anschluss an eine Feldbusleitung oder an das Internet erlaubt oder allgemein an von der Messvorrichtung 1 separate Einheiten.

Die Sensorvorrichtung 2 besteht aus einem von dem Messmedium durchströmten Messrohr 5, das insbesondere abschnittsweise über einen sich konisch erweiternden Durchmesser verfügt. Horizontal beweglich ist in dem Messrohr 5 ein Schwebekörper 6 angeordnet. Der Schwebekörper 6 wird durch den Auftrieb und durch das an ihm vorbeiströmende Medium horizontal nach oben gehoben und durch die Gewichtskraft nach unten gedrückt. Nach einer Einschwingphase verharrt der Schwebekörper 6 auf einer Höhe, die einen Rückschluss auf den Durchfluss des Mediums erlaubt. Diese Position wird hier beispielsweise über die Detektionsvorrichtung 7 magnetisch abgegriffen (diese Positionsbestimmung ist beispielsweise beschrieben in der Patentschrift DE 196 39 060 C2). Die Detektionsvorrichtung 7 generiert ausgehend von der Messung eine Messinformation, bei der es sich je nach Ausgestaltung um einen primären Rohmesswert oder um ein Rohmesssignal handelt. In der gezeigten Ausgestaltung ist die Messinformation die Höhenangabe des Schwebekörpers 6.

Der Zusammenhang zwischen dem Höhenwert und dem Durchfluss wird u. a. bestimmt von der Form des Schwebekörpers 6, der Form des Messrohrs 5 und insbesondere auch von der Viskosität des Messmediums. Vor allem für die letztgenannte Abhängigkeit ist es - insofern die Anwendung der Messvorrichtung 1 nicht auf gewisse Medien eingeschränkt wird - erforderlich, für eine Vielzahl von Medien eine größere Anzahl von Kalibrationsdaten zu hinterlegen. Dies stellt dabei ggf. große Anforderungen an die - hier als Teil der Auswertevorrichtung 3 ausgeführte - Speichereinheit 8 der Messvorrichtung 1. Weiterhin ist dabei auch die Temperaturabhängigkeit der Viskosität zu beachten.

Um die Messgenauigkeit zu erhöhen und um so zuverlässigere Ergebniswerte zu bestimmen, ist die Messvorrichtung 1 in einer Messanordnung 9 eingebunden, die die Möglichkeiten der Messung erweitert und den oben angesprochenen Problematiken begegnet.

Die Auswertevorrichtung 3 ist über die Schnittstelle 4 mit einer Datenvorrichtung 10 verbunden. Die Verbindung kann dabei ständig oder nur temporär bestehen und dient insbesondere dem Daten- bzw. Informationsaustausch. Die Verbindung ist hier insbesondere bidirektional ausgeführt. Die Datenvorrichtung 10 befindet sich vorzugsweise außerhalb der Prozessumgebung, so dass insbesondere keine Energiebeschränkungen oder Platzlimitationen bestehen. In einer Ausgestaltung handelt es sich insbesondere um einen Server, der über eine Internetverbindung erreichbar ist. Die Datenvorrichtung 10 verfügt über eine Datenvorrichtungsschnittstelle 11, die der Kommunikation mit der Auswertevorrichtung 3 dient. Weiterhin verfügt die Datenvorrichtung 10 über einen hier separat ausgestalteten Datenspeicher 12, in dem mehrere Kalibrationskurven oder Parametersätze für unterschiedliche Medien hinterlegt sind.

Für die Beachtung der Temperaturabhängigkeit der Viskosität des Mediums ist zusätzlich noch eine Sekundärsensorvorrichtung 13 vorgesehen, die hier als Temperatursensor ausgestaltet ist und die Temperatur des Messmediums misst. Verbunden ist die Sekundärsensorvorrichtung 13 mit der Datenvorrichtung 10, die ausgehend von der Temperatur des Mediums als Sekundärmessinformation die passenden Kalibrationsdaten auswählt und aus der Messinformation der Messvorrichtung 1 die Zwischeninformation ermittelt und insbesondere berechnet. Bei der Zwischeninformation handelt es sich dabei in einer Variante um einen einzelnen Wert und in einer weiteren Variante um einen Datensatz, der insbesondere an die Auswertevorrichtung 3 der Messvorrichtung 1 zur Abspeicherung in der dortigen Speichereinheit 8 übermittelt wird.

Ausgehend von der Zwischeninformation ermittelt die Auswertevorrichtung 3 den Ergebniswert des Durchflusses als Messwert der Messgröße.

Insgesamt misst die Messvorrichtung 1, erhält von der separaten Datenvorrichtung 10 aus der Messung eine Zwischeninformation und ermittelt wiederum selbst den Ergebniswert als Messwert für die zu bestimmende Messgröße.

Die Fig. 2 zeigt schematisch einen Ablauf einzelner Schritte einer alternativen Umsetzung des erfindungsgemäßen Verfahrens.

Im Schritt 101 wird von der Messvorrichtung eine Messinformation gewonnen, die abhängig von der zu messenden Messgröße ist.

Im Schritt 102 wird diese Messinformation an die Datenvorrichtung übermittelt. Dort erfolgt im Schritt 103 ausgehend von den dort abgespeicherten Daten bzw. Formeln eine Berechnung bzw. allgemein Ermittlung einer Zwischeninformation. Die Zwischeninformation wird im Schritt 104 an die Messvorrichtung zurück übergeben.

Im Schritt 105 erfolgt von der Messvorrichtung der Zugriff auf eine Sekundärsensorvorrichtung, von der ein Sekundärmessinformation als zusätzliche Information über das Messmedium oder den Prozess, in dem sich das Medium befindet und in dem die Messung erfolgt, abgegriffen wird.

Ausgehend von der Zwischeninformation und der Sekundärmessinformation wird im Schritt 106 ein Ergebniswert für die zu bestimmende Messgröße von der Messvorrichtung ermittelt und im Schritt 107 über eine Vorort-Anzeigeeinheit angezeigt.

Insofern die Messvorrichtung feststellt, dass keine Neuberechnung der Zwischeninformation erforderlich ist, wofür sie im Schritt 108 eine aktuelle Messinformation generiert, erfolgt der Rücksprung zu Schritt 105. Die Abfrage der Sekundärsensorvorrichtung im Schritt 105 und die Berechnung des aktuellen Ergebniswerts im Schritt 106 erfolgt also mit der aktuellen Mess- und Sekundärmessinformation, jedoch unter Anwendung der weiterhin geltenden Zwischeninformation als Zwischenrechenschritt bei der Bestimmung des Ergebniswerts. Daher kann in dieser Ausgestaltung insbesondere auch die Verbindung zwischen der Messvorrichtung und der Datenvorrichtung nur temporär bestehen und muss nicht die ganze Zeit aufrechterhalten werden.

Das Verfahren setzt also darauf auf, dass ein Teil der Berechnung bzw. ein Teil der Datenspeicherung von der eigentlichen Messvorrichtung weg auf eine separate Datenvorrichtung ausgelagert wird. Der Ergebniswert wird jedoch letztendlich von der Messvorrichtung selbst erzeugt, so dass die Verbindung zwischen Messvorrichtung und der Datenvorrichtung ggf. nur für beschränkte Zeiträume erforderlich sein kann.

## Patentansprüche

1. Messanordnung (9) mit mindestens einer Messvorrichtung (1) zur Bestimmung mindestens einer Messgröße und mit mindestens einer von der Messvorrichtung (1) separaten Datenvorrichtung (10), wobei die Messvorrichtung (1) mindestens einen zumindest von der Messgröße abhängigen Rohmesswert erzeugt und mindestens einen Ergebniswert für die Messgröße ermittelt und wobei die Messvorrichtung (1) und die Datenvorrichtung (10) zumindest temporär miteinander verbunden sind,
wobei die Messvorrichtung eine Auswertevorrichtung (3) aufweist,
**dadurch gekennzeichnet,**
**dass** sich in dem Rohmesswert die eigentlich interessierende Messgröße widerspiegelt,
**dass** die Auswertevorrichtung (3) den Rohmesswert an die Datenvorrichtung (10) ausgibt, dass die Datenvorrichtung (10) eine von dem Rohmesswert abhängige Zwischeninformation ermittelt, sodass ein Teil der Ermittlung des Ergebniswerts für die Messgröße in der Datenvorrichtung (10) erfolgt, dass die Auswertevorrichtung (3) die Zwischeninformation empfängt und dass die Auswertevorrichtung (3) in Abhängigkeit von der Zwischeninformation den Ergebniswert berechnet.

2. Messanordnung (9) nach Anspruch 1, **dadurch gekennzeichnet, dass** mindestens eine Sekundärsensorvorrichtung (13) vorgesehen ist, die mindestens eine Sekundärmessinformation erzeugt.

3. Messanordnung (9) nach Anspruch 2, **dadurch gekennzeichnet, dass** die Sekundärsensorvorrichtung (13) die Sekundärmessinformation an die Datenvorrichtung (10) übermittelt und dass die Datenvorrichtung (10) die Zwischeninformation mindestens in Abhängigkeit von dem Rohmesswert und der Sekundärmessinformation ermittelt.

4. Verfahren zur Bestimmung mindestens einer Messgröße, wobei von einer Messvorrichtung (1) mindestens ein von der Messgröße abhängiger Rohmesswert erzeugt wird, in dem sich die eigentlich interessierende Messgröße widerspiegelt, wobei von der Messvorrichtung (1) der Rohmesswert an eine von der Messvorrichtung (1) separate Datenvorrichtung (10) übermittelt wird, wobei von der Datenvorrichtung ein Teil der Ermittlung des Ergebniswerts für die Messgröße erfolgt, indem ausgehend von dem Rohmesswert mindestens eine Zwischeninformation ermittelt wird und wobei von der Messvorrichtung (1) ausgehend mindestens von der mindestens einen Zwischeninformation mindestens ein Ergebniswert für die Messgröße berechnet wird.

5. Verfahren nach Anspruch 4, **dadurch gekennzeichnet, dass** von einer Sekundärsensorvorrichtung (13) mindestens eine Sekundärmessinformation erzeugt wird.

6. Verfahren nach Anspruch 5, **dadurch gekennzeichnet, dass** die Zwischeninformation ausgehend von der Sekundärmessinformation und ausgehend von dem Rohmesswert ermittelt wird.

7. Verfahren nach Anspruch 5 oder 6, **dadurch gekennzeichnet, dass** der Ergebniswert ausgehend von der Sekundärmessinformation und der Zwischeninformation berechnet wird.

## Claims

1. Measuring arrangement (9) having at least one measuring device (1) for determining at least one measured variable and having at least one data device (10) separate from the measuring device (1), wherein the measuring device (1) generates at least one raw measured value dependent at least on the measured variable and determines at least one result value for the measured variable, and wherein the measuring device (1) and the data device (10) are connected to one another at least temporarily,
wherein the measuring device comprises an evaluation device (3),
**characterized in**
**that** the raw measured value reflects the measured variable of actual interest,
**that** the evaluation device (3) outputs the raw measured value to the data device (10), that the data device (10) determines intermediate information dependent on the raw measured value, so that part of the determination of the result value for the measured variable takes place in the data device (10), that the evaluation device (3) receives the intermediate information and that the evaluation device (3) calculates the result value in dependence on the intermediate information.

2. Measuring arrangement (9) according to claim 1, **characterized in that** at least one secondary sensor device (13) is provided which generates at least one secondary piece of measuring information.

3. Measuring arrangement (9) according to claim 2, **characterized in that** the secondary sensor device (13) transmits the secondary measuring information to the data device (10) and that the data device (10) determines the intermediate information at least in dependence on the raw measured value and the secondary measuring information.

4. Method for determining at least one measured variable, wherein at least one raw measured value dependent on the measured variable is generated by a measuring device (1), in which the measured variable of actual interest is reflected, wherein the raw measured value is transmitted from the measuring device (1) to a data device (10) separate from the measuring device (1), wherein part of the determination of the result value for the measured variable is carried out by the data device by determining at least one intermediate piece of information based on the raw measured value and wherein at least one result value for the measured variable is calculated by the measuring device (1) based on at least one intermediate piece of information.

5. Method according to claim 4, **characterized in that** at least one secondary piece of measurement information is generated by a secondary sensor device (13).

6. Method according to claim 5, **characterized in that** the intermediate information is determined from the secondary measurement information and from the raw measurement value.

7. Method according to claim 5 or 6, **characterized in that** the result value is calculated on the basis of the secondary measurement information and the intermediate information.

## Revendications

1. Arrangement de mesure (9) comprenant au moins un dispositif de mesure (1) destiné à déterminer au moins une grandeur de mesure et comprenant au moins un dispositif de données (10) séparé du dispositif de mesure (1), le dispositif de mesure (1) générant au moins une valeur mesurée brute dépendant au moins de la grandeur mesurée et déterminant au moins une valeur de résultat pour la grandeur mesurée et le dispositif de mesure (1) et le dispositif de données (10) étant au moins temporairement reliés l'un à l'autre,
le dispositif de mesure possédant un dispositif d'interprétation (3),
**caractérisé en ce que** la grandeur mesurée intéressante proprement dite se reflète dans la valeur mesurée brute,
**en ce que** le dispositif d'interprétation (3) délivre la valeur mesurée brute au dispositif de données (10), **en ce que** le dispositif de données (10) détermine une information intermédiaire dépendante de la valeur mesurée brute, de sorte qu'une partie de la détermination de la valeur de résultat pour la grandeur mesurée s'effectue dans le dispositif de données (10), **en ce que** le dispositif d'interprétation (3) reçoit l'information intermédiaire et **en ce que** le dispositif d'interprétation (3) calcule la valeur de résultat en fonction de l'information intermédiaire.

2. Arrangement de mesure (9) selon la revendication 1, **caractérisé en ce qu'**il existe au moins un dispositif de détection secondaire (13) qui génère au moins une information de mesure secondaire.

3. Arrangement de mesure (9) selon la revendication 2, **caractérisé en ce que** le dispositif de détection secondaire (13) communique l'information de mesure secondaire au dispositif de données (10) et **en ce que** le dispositif de données (10) détermine l'information intermédiaire au moins en fonction de la valeur mesurée brute et de l'information de mesure secondaire.

4. Procédé de détermination d'au moins un grandeur mesurée, au moins une valeur mesurée brute dépendante de la grandeur mesurée étant générée par un dispositif de mesure (1), dans laquelle se reflète la grandeur mesurée intéressante proprement dite, la valeur mesurée brute étant communiquée par le dispositif de mesure (1) à un dispositif de données (10) séparé du dispositif de mesure (1), une partie de la détermination de la valeur de résultat pour la grandeur mesurée étant effectuée par le dispositif de données en déterminant au moins une information intermédiaire à partir de la valeur mesurée brute et au moins une valeur de résultat pour la grandeur mesurée étant calculée par le dispositif de mesure (1) en partant au moins de l'au moins une information intermédiaire.

5. Procédé selon la revendication 4, **caractérisé en ce qu'**au moins une information de mesure secondaire est générée par un dispositif de détection secondaire (13) .

6. Procédé selon la revendication 5, **caractérisé en ce que** l'information intermédiaire est déterminée à partir de l'information de mesure secondaire et à partir de la valeur mesurée brute.

7. Procédé selon la revendication 5 ou 6, **caractérisé en ce que** la valeur de résultat est calculée à partir de l'information de mesure secondaire et de l'information intermédiaire.
